# EUROPEAN PATENT SPECIFICATION

(11) **EP 0 688 192 B1**
(45) Date of publication and mention of the grant of the patent: **23.07.1997**
(21) Application number: 94909192.0
(22) Date of filing: 11.03.1994
(51) Int. Cl.: A61C 8/00, A61C 13/235

(54) **A MAGNETIC FASTENING SYSTEM FOR A DENTAL PROSTHESIS**
MAGNETISCHES BEFESTIGUNGSSYSTEM FÜR ZAHNPROTHESEN
SYSTEME DE FIXATION MAGNETIQUE POUR PROTHESE DENTAIRE

(30) Priority: 11.03.1993 GB 9305028
(43) Date of publication of application: 27.12.1995
(73) Proprietor: TECHNOVENT LTD., Headingley, Leeds LS6 3BR (GB)
(72) Inventor: HALL, Richard, Malcolm, Leeds LS17 7JS (GB)
(74) Representative: Denmark, James
(86) International application number: GB9400486
(87) International publication number: WO9420042

(56) References cited:
- EP-A- 0 347 510
- EP-A- 0 387 350
- FR-A- 2 393 565
- US-A- 4 508 507
- US-A- 4 626 213
- US-A- 4 997 372

## Description

This invention relates to apparatus for use in prosthesis work, typically dental, cranio-facial and other body part work involving implantology, however other uses are also envisaged not necessarily involving implantology such as the attachment of a prosthesis to the natural roots of teeth and in multicomponent prosthesis assemblies.

The use of implantology in prosthesis work in humans is well known, and the majority of this work is performed in relation to humans, but technically there is no reason why the process and the present invention cannot be applied in other animal bodies, and the invention is therefore to be considered as extended thereto, although in the following specific reference is made only to humans.

In implantology, a member, known as an implant, is inserted into an appropriate aperture drilled in the bone. The implant which is in the nature of a post may either be screwed into the drilled aperture or simply tapped thereinto. The body tissue grows around the implant as healing in the vicinity of the drilled bone takes place, and the implant therefore becomes firmly embedded in the body.

The prosthesis is built upon such an implant and, depending upon the prosthesis, there may be and usually will be a plurality of implants for each prosthesis. For example to hold an upper or lower denture may require one or more implants. When the implants have been placed, they form the foundation for the holding of the prosthesis, and the holding method adopted may be any of several which are currently used. Thus, the implants may be connected by wires or bridges by which the prosthesis can be clipped or attached using clips or press-studs, or magnets may be used by which the prosthesis may be readily connected to and removed from the implants.

This invention is concerned with magnetic mounting of the prosthesis, but it should be mentioned that usually the implants which are used customarily are designed so that they can either receive magnetisable elements or can receive mountings for fixing of the prosthesis by other means.

When an implant is used in a fashion involving magnetic attachment of the prosthesis, a prosthesis member has a face which is magnetically attracted to the top face of the implant assembly, the said faces generally being complementary. Magnetic attachment has an advantageous characteristic over other attachments, in that the magnetic components allow stress-breaking play such that the implant components are protected from much stress. In systems of rigid attachments, implants are often caused to fail due to excessive stress being applied thereto by the prosthesis.

On the other hand, it is desirable that the prosthesis should be held as securely as possible so that it will not move excessively or indeed accidentally detach entirely in use. This is difficult in practise to achieve especially where the prosthesis is a denture as these dentures are subjected to heavy displacement forces when the user is chewing. Dentures therefore held magnetically to implants tend to slip as a result of the contact faces of the implant assembly slipping one relative to the other in a lateral direction and have less functional efficiency. Furthermore, dentures which move can be uncomfortable and painful against the supporting ridge mucosa.

When a prosthesis is used for cranio facial cosmetic surgery, the need to prevent excessive movement of the prosthesis is equally important because although such functional movement may not necessarily be associated with pain and discomfort, the entire cosmetic effect can be destroyed in the event of such movement or detachment taking place. The present invention is concerned with the provision of a prosthesis attachment assembly comprising a fixture unit and a prosthesis member (and also relates to the prosthesis member per se) by which the aforesaid disadvantages of the known arrangements are obviated or mitigated.

According to the present invention there is provided a prosthetic attachment assembly comprising a first unit to be mounted in a removable prosthesis by moulding the prosthesis around the assembly, and a second unit adapted to be rigidly attached to the prosthesis wearer, said second unit presenting an end contact face for a complementary contact face on said first unit, said faces being adapted to be magnetically attracted, and wherein said first unit or said second unit comprises a skirt overlapping and surrounding said faces when said faces are contacted, preventing lateral slippage of same beyond a pre-determined amount.

The problem of lateral slippage has been addressed in prior patent specification namely EP-A-0 347 510 and US-A-4 508 507, but the methods adopted in these prior specifications are different from that provided by the present invention, in that they do not provide for the presence of a skirt overlapping and surrounding contact faces of respective units.

The projection formation forms a skirt surrounding the said contact faces when connected, which provides for a robust and long-lasting attachment assembly by providing abutments for the outer edges of the opposite contact face in lateral directions all around.

The skirt or other projection formation is preferably on the prosthesis member since in most cases it will be undesirable to have sharp projections exposed on the body of the wearer at times when the prosthesis is removed, and such member may comprise a permanent magnet provided with a seal adapted to neatly and securely hold the magnet, said projection formation being preferably disposed on the seal. A contact face of the magnet to which the seal may not extend is preferably flat and is preferably circular.

The seal preferably is non-corrosive and suitably may be of for example titanium metal or alloy, or plastics material such as a polyacrylic or polyolefin plastics material; specifically the DELRIN (registered trade mark) acetale homopolymer manufactured by Du Pont, and polypropylene and high molecular weight polyethylene have been found to be particularly suitable. The plastics material seal may be injection moulded or machined with the skirt or other projection formation being integral therewith, and the magnet is preferably pushed into the seal. Alternatively, the seal may be moulded around the magnet, or it may be applied as a coating which solidifies. In any event, it is preferred that the seal protects the magnet from corrosive contact with mouth and body fluids, at least on those surfaces of the magnet other than the contact face. The seal preferably comprises a fixed locking ring on its outer surface which aids in retaining the sealed magnet within a prosthesis moulded around it.

Alternatively, the seal for the magnet may have on its outer surface a threaded portion which enables the seal and the magnet to be screwed into a retention ring, the ring in turn being held fast in the moulded prosthesis, for example during the moulding of same. The ring is also preferably made of non-corrosive, non-magnetic material. This arrangement provides that the magnet and the seal may readily be removed from the prosthesis and replaced at will by a simple unscrewing action. The ring is left as a permanent mounting in the prosthesis. This arrangement provides that the seal and magnet may be screwed into the ring so as to possibly leave a void behind the seal and in the prosthesis so that when the magnet is subjected to axial loading as would be the case when it is used in a denture, the seal will be allowed to "yield" slightly giving the user a more natural biting or chewing feel. The "yield" will take place in a compression or distortion of the threads of the seal and the inner end of the seal will be allowed to deflect further into the said void in the prosthesis.

In one configuration, the magnet may be dome shaped and may be a two or split pole magnet in that the flat magnetic face of the magnet presents at least one north and at least one south pole. The seal will be correspondingly shaped.

The projection formation preferably is designed to overlap the end of the unit or member by a small lateral clearance to allow limited stress-breaking play of the magnetic components during function and also allow tilt and slide removal of the prosthesis, for example in the order of 0.05 to 1 mm, limiting the relative lateral movement between the contact faces of the prosthesis assembly to 0.1 to 2 mm. The clearance at each side is preferably approximately 0.2 mm.

The skirt or other projection of the invention may also be profitably used in connection with impression transfer magnets.

According to a further embodiment of the present invention there is also provided the skirt or other projection formation alone, for fitting to a prosthesis member or fixture unit.

According to a yet further embodiment of the present invention, there is provided a prosthesis comprising at least one and preferably a plurality of said prosthesis members and a corresponding number of fixture units.

The present invention also extends to a prosthesis member as set forth above for use in the prosthesis assembly according to this invention.

According to a yet further embodiment, the prosthesis member may be provided with anti-rotational means on its outer surface, which are preferably in the form of one or more anti-rotation flats.

Embodiments of the present invention will now be described, by way of example, with reference to the accompanying diagrammatic drawings, wherein:-
Fig. 1 is a sectional elevation of an prosthetic attachment assembly for the purposes of explaining the invention;
Fig. 2 is a sectional elevation similar to Fig. 1 but showing an embodiment of the invention;
Fig. 3 is an enlarged detailed view illustrating how the arrangement of Fig. 1 is modified to form the arrangement of Fig. 2;
Fig. 4 is a sectional side view showing how the seal of Fig. 1 or Fig. 2 may be provided with an outer thread for screwing into a tension ring;
Fig. 5 is a sectional elevation of an prosthetic attachment assembly according to a further embodiment of the invention adapted for transfer impression use;
Fig. 6 is a side view to a reduced scale of the sealed magnet of Fig. 5; and
Fig. 7 is a plan view from above to a further reduced scale of the sealed magnet of Fig. 5.

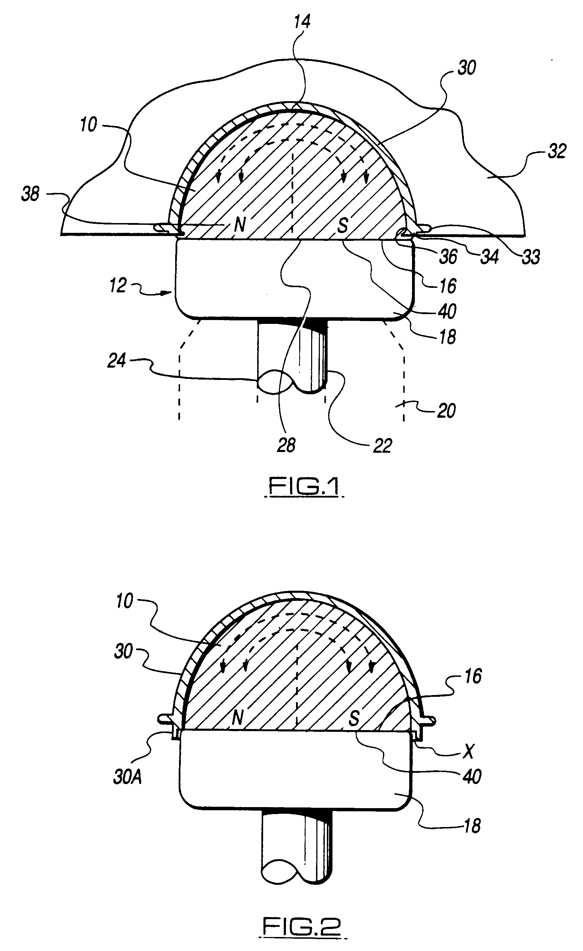

Referring to Fig. 1, the sectional elevation illustrates a two-pole or split magnet 10 of an implant prosthesis assembly indicated by reference 12.

The magnet 10 is generally hemispherical and is provided with a dome top 14. The flat face 16 of the magnet forms the contact face between the magnet and an implant unit of the assembly 12, such unit being made up in this example of a cap 18 and an implant abutment assembly post 20, these two being screwed together via a threaded spindle 22 on the cap and a threaded bore 24 in the post. The cap 18 presents a magnetisable upper contact face 28 which is magnetically held to the face 16 in use and in the position shown in Fig. 1.

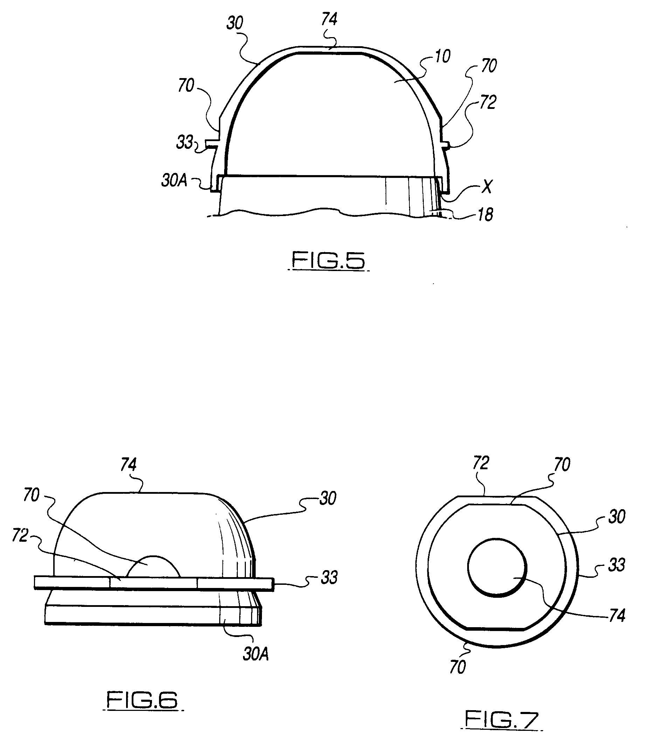

To give some idea of size of the assembly shown in Figs. 1 to 7, the cap 18 and magnet 10 in the contact face region are of a diameter in the order of 4mm or 5mm.

The magnet 10 is sealed by means of a titanium seal 30 which is held in a prosthesis moulding 32 as shown, and in this connection the cap 30 may be provided with a retention ring 32 and an edge 34 overlaps a groove 36 in the magnet adjacent the magnetic face 16. Alternatively, friction and/or adhesives or laser weld, solder flux or other fusion band used to retain the magnet 10 in the seal 30.

The split-pole magnet design provides that it is in effect horseshoe shaped to provide at least one north pole 38 and at least one south pole 40. The magnetic flux which is established when the cap and magnet are magnetically attracted forms a closed field flux as shown and there is very little external flux in the body surrounding the implant assembly, which is desirable as magnetic attraction of the prosthesis member and implant unit is minimized.

The seal 30 is non-corrosive and should ideally be non-magnetic to further enhance the closed field effect, and preferably is in titanium metal or alloy or plastics material although this is not totally necessary.

A preferred plastics material is polyacrylic or polyolefin plastic, and specifically DELRIN (registered trade mark) acetale homopolymer manufactured by Du Pont, polyethylene or polypropylene is preferred. If polyethylene is used it is preferred that it should be high molecular weight polyethylene.

The seal 30 may be injection moulded or otherwise formed either around the magnet or separately therefrom, and the magnet 10 is subsequently pushed into the seal, but the purpose of the seal is to protect as much of the magnet as possible from the corrosive body fluids.

When the prosthesis is formed around the seal 14, the locking rim 33 forms a retention means for holding the prosthesis member made up of the seal 30 and the magnet 10 in the prosthesis 32.

With the arrangement shown in Fig. 1, if it is used in a denture, then there will be fairly heavy chewing forces applied axially of the implant assembly, and there may also be a tendency for lateral forces to be applied or arise such that there may be relative sliding between the faces 16 and 40 which are magnetically attracted. These faces incidentally although shown as being flat need not necessarily be so (but should ideally accurately mate in contour).

When such lateral forces do arise there may be relative movement between the prosthesis 32 and the remainder of the body, which can be undesirable as is explained hereinbefore.

The present invention provides a means whereby this lateral movement may be limited, and an embodiment of the invention illustrated herein is shown in Fig. 2.

It will be seen that to achieve this objective, the seal 30 is provided with an extension skirt 30A on the free edge of same so that skirt 30A overlaps the two contact faces 16 and 40 which are magnetically attracted and which may tend to slip in use. The functioning of the skirt 30A will be readily understood, and the maximum amount of movement between the magnetic faces 16 and 40 is limited to the clearance X between the skirt 30A and the outer wall of the cap 18. In practice this clearance X may be 0.05 to 1 mm making the maximum amount of relative movement laterally between the faces 16 and 40 in the order of 0.1 to 2 mm. This clearance allows a tilt and slide removal of the prosthesis to be effected and also in order to allow this type of removal the skirt is of limited height. In the illustrated embodiment, the height of the skirt is approximately 0.6 mm, however it will be appreciated that this height is limited only by the amount of lateral tolerance X provided, in comparison to the extent of tilt and slide action desired. In any case, it is preferred that the height of the skirt is less than the dimensions of the contact faces 16 and 40 and also is preferably less than the height of the cap 18, in order to allow tilt and slide removal to be effected simply and reliably.

It is to be noted that the provision of a skirt member for attachment to a magnet or implant unit is also contemplated according to the invention, as equivalent effects are achieved.

Although the magnet 10 is shown as being a split pole dome shaped magnet, again it is to be mentioned that this is not necessary to the present invention as other magnet shapes could be used.

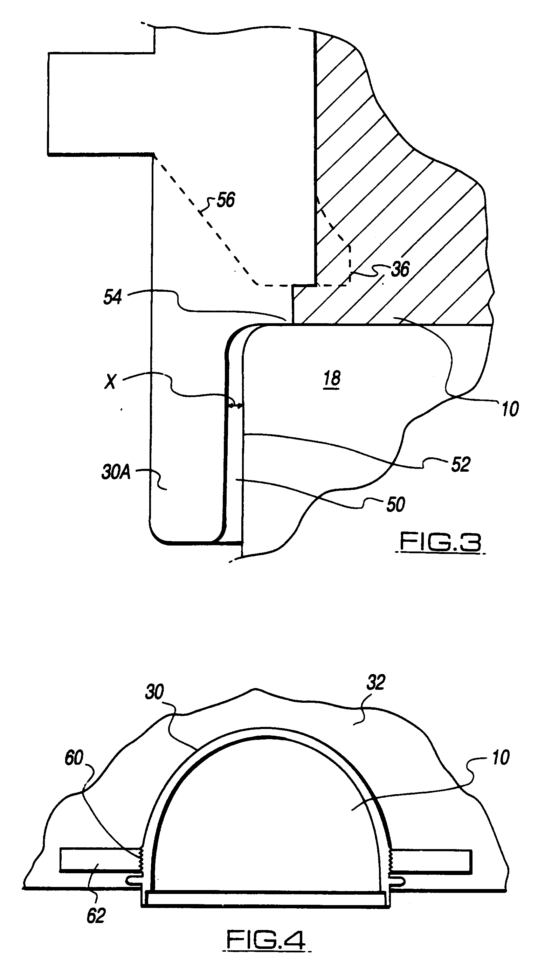

Fig. 3 illustrates the skirt 30A in greater detail, the magnet 10 also being shown, and it will be seen that the skirt 30A is of constant cross-section and its inner face 50 is spaced from the edge 52 of the cap 18 by the clearance X and the said inner face 50 is radiused to provide a shoulder 54 which buts against the free edge of magnet 10 under the groove 36. The dotted line 56 shows the profile configuration of the seal shown in Fig. 1.

The arrangement shown in Fig. 4 is to provide a means whereby the seals 30 which may be as shown in Fig. 1 or Fig. 2 may be readily inserted into and removed from the prosthesis 32, and in this connection, the outer surface of the seal 30 is threaded in the region 60 and is threadedly engaged in a retention ring 62 which is embedded in the prosthesis 32. Seal 30 will of course normally hold a magnet (not shown in Fig. 4) and it will be understood that when the prosthesis member comprising the seal 30 and its magnet is to be removed, it is simply unscrewed from the ring 62 and it may be replaced by another prosthesis member. The seal 30 and/or the magnet may be provided with an appropriate tool engaging slot, aperture, groove or flat whereby the prosthesis member can be readily removed from the ring 62.

A further aspect of the invention also makes use of the non-slip nature of the skirted magnets, in the manufacture of a prosthesis, both when an impression is made from the patient's body, when a positive casting is made therefrom, and when the first prosthesis is made it is imperative that the spatial locations of the implants and magnets are accurately replicated. Slippage of the components during impression transfer may be minimized by the use of skirted magnets of the invention.

Figs. 5, 6 and 7 illustrate an embodiment of magnet seal 30 which may be advantageously used when the impression transfer method of prosthesis formation is used since not only is the locational mounting of a prosthesis magnet 10 on the implant cap 18 positional but also rotational, and it is advantageous to ensure that the rotational disposition of the prosthesis member is maintained throughout the impression transfer process of casting the model and also once the prosthesis is complete. In the event of the undesirable rotation of a component with respect to the corresponding component, any rotational eccentricities in their magnetic attraction would be mismatched. To the end of reducing the possibility of such unwanted rotation, anti-rotation flats, or other non-circular abberrations may be provided on the sides of the seal member 30.

In the embodiment of Figs. 5 to 7, anti-rotation flats 70, being milled flat portions located on opposed sides of the seal and immediately above the rim 33, and a further locating flat 72 on the rim 33 itself are provided. When a casting is made over the seal member 30, the casting exhibits corresponding formations which not only inhibit rotation, but also allow the precise re-location of the prosthesis member in the event of the member being accidentally removed from the casting member. Furthermore, the use of a locating flat 72 on the seal member may be adopted in order to effectively distinguish an impression transfer magnet from the increased flux prosthesis magnets.

The flat top 74 allows the magnet 10 to be carried with a desired attitude manipulation tool having a corresponding flat surface.

The present invention provides an effective means for preventing unwanted slippage between the magnetic contact faces in a magnetic implant assembly.

## Claims

1. A prosthetic attachment assembly comprising a first unit (10) to be mounted in a removable prosthesis (32) by moulding the prosthesis (32) around the assembly, and a second unit (12) adapted to be rigidly attached to the prosthesis wearer, said second unit presenting an end contact face (28) for a complementary contact face (40) on said first unit (10), said faces (28,40) being adapted to be magnetically attracted, characterised in that said first unit (10) or said second unit (12) comprises a skirt (30A) overlapping and surrounding said faces (28,40) when said faces (28,40) are contacted, preventing lateral slippage of same beyond a predetermined amount.

2. An assembly according to claim 1, wherein said skirt (30A) is disposed on said first unit (10).

3. An assembly according to claim 1 or 2 wherein the said contact faces (28,40) are flat.

4. An assembly according to any of claims 1 to 3, wherein said first unit (10) comprises a permanent magnet (10) provided with a seal (30) adapted to neatly and securely hold said magnet (10).

5. An assembly according to claim 4, wherein the said skirt (30A) is disposed on the seal (30).

6. An assembly according to claim 4 or 5, wherein said magnet (10) has a circular contact face (40) to which the seal (30) does not extend.

7. An assembly according to any of claims 4 to 6, wherein said seal (30) is of titanium metal or alloy.

8. An assembly according to any of claims 4 to 7, wherein said seal (30) is of a plastics material such as DELRIN®, polypropylene or high molecular weight polyethylene.

9. An assembly according to any of claims 4 to 8, wherein the magnet (10) is pushed into the seal (30) and retained therein by an adhesive or fusion bond.

10. An assembly according to any of claims 4 to 9, wherein the seal (30) for the magnet (10) has on its outer surface a threaded portion (60) which enables the seal (30) and the magnet (10) to be screwed into a retention ring (62), the ring (62) in turn being adapted to be held fast in the prosthesis (32).

11. An assembly according to claim 10, wherein the seal (30) and magnet (10) are mountable in the retention ring (62) with a void behind the seal so as to yieldably respond to axial pressure.

12. An assembly according to any of claims 4 to 11, wherein the magnet (10) is dome shaped.

13. An assembly according to any of claims 4 to 12, wherein the magnet (10) is a split pole magnet.

14. An assembly according to any of claims 1 to 13, wherein the skirt (30A) is designed to overlap the end of the second unit (12) with a small lateral clearance to allow limited stress breaking play of the prosthesis.

15. An assembly according to claim 14 wherein the lateral clearance is between 0.05 and 1 mm.

16. An assembly according to claim 15 wherein the lateral clearance is approximately 0.2 mm.

17. An assembly according to any of claims 1 to 16, wherein the height of the skirt (30A) is less than the width of the said contact faces (28,40).

18. An assembly according to claim 17, wherein the said height is approximately 0.6 mm.

19. An assembly according to any of claims 1 to 18, comprising anti-rotational means (70) on the outer surface of the prosthesis member (32).

20. A skirt (30A) for fitting to a prosthesis member of fixture unit such that said prosthesis member of fixture unit may be utilised in the assembly of any of claims 1 to 19.

21. A prosthesis assembly comprising a plurality of assemblies according to any of claims 1 to 19, and a prosthesis (32) wherein the plurality of said prosthesis members are mounted.

22. A prosthesis member for use in an assembly according to any of claims 1 to 19.

23. An assembly according to any of claims 1 to 19, wherein said prosthesis member (32) is an impression transfer magnet.

## Patentansprüche

1. Prothetische Befestigungsanordnung, umfassend eine erste Einheit (10), die in eine entfernbare Prothese (32) durch Formen der Prothese (32) um die Anordnung herum einzubauen ist, und eine zweite Einheit (12), die dazu angepaßt ist, um Start mit dem Prothesenträger verbunden zu werden, wobei die zweite Einheit eine Stirnkontaktfläche (28) für eine komplementäre Kontaktfläche (40) an der ersten Einheit (10) aufweist, wobei die Flächen (28,40) dazu angepaßt sind, um magnetisch angezogen zu werden, dadurch gekennzeichnet, daß die erste Einheit (10) oder die zweite Einheit (12) einen und (30A) umfaßt, der die Flächen (28, 40) überlappt und umgibt, wenn die Flächen miteinander in Kontakt gebracht werden, um so ein seitliches Verrutschen über ein vorbestimmtes Maß hinaus zu verhindern.

2. Anordnung nach Anspruch 1, bei der der Rand (30A) auf der ersten Einheit (10) angeordnet ist.

3. Anordnung nach Anspruch 1 oder 2, bei der die Kontaktflächen (28, 40) flach sind.

4. Anordnung nach einem der Ansprüche 1 bis 3, bei der die erste Einheit (10) einen Permanentmagneten (10) umfaßt, der mit einer Dichtung (30) versehen ist, die dazu angepaßt ist, um den Magneten (10) ordentlich und sicher zu halten.

5. Anordnung nach Anspruch 4, bei der der und (30A) auf der Dichtung (30) angeordnet ist.

6. Anordnung nach Anspruch 4 oder 5, bei der der Magnet (10) eine kreisförmige Kontaktfläche (40) aufweist, zu der sich die Dichtung (30) hin nicht erstreckt.

7. Anordnung nach einem der Ansprüche 4 bis 6, bei der die Dichtung (30) aus Titanmetall oder -legierung besteht.

8. Anordnung nach einem der Ansprüche 4 bis 7, bei der die Dichtung aus Kunststoffmaterial, wie DELRIN®, Polypropylen oder hochverdichtetem Polyethylen besteht.

9. Anordnung nach einem der Ansprüche 4 bis 8, bei der der Magnet (10) in die Dichtung (30) gedrückt wird und darin von einer Klebe- oder Schmelzverbindung gehalten wird.

10. Anordnung nach einem der Ansprüche 4 bis 9, bei der die Dichtung (30) für den Magneten (10) auf ihrer Außenfläche einen Gewindeabschnitt (60) aufweist, der es der Dichtung (30) und dem Magneten (10) ermöglicht, in einen Haltering (62) gescbraubt zu werden, wobei der Ring (62) seinerseits dazu angepaßt ist, um fest in der Prothese (32) gehalten zu werden.

11. Anordnung nach Anspruch 10, bei der die Dichtung (30) und der Magnet (10) in den Haltering (62) mit einem Hohlraum hinter der Dichtung montierbar sind, um so nachgiebig auf Axialdruck zu antworten.

12. Anordnung nach einem der Ansprüche 4 bis 11, bei der der Magnet (10) kuppelförmig ausgebildet ist.

13. Anordnung nach einem der Ansprüche 4 bis 12, bei der der Magnet (10) ein Spaltpolmagnet ist.

14. Anordnung nach einem der Ansprüche 1 bis 13, bei der der Rand (30A) so geformt ist, um das Ende der zweiten Einheit mit einem kleinen seitlichen Spielraum zu überlappen, um ein begrenztes Belastungsbruchspiel zuzulassen.

15. Anordnung nach Anspruch 14, bei der der seitliche Spielraum zwischen 0,05 und 1 mm liegt.

16. Anordnung nach Anspruch 15, bei der der seitliche Spielraum etwa 0,2 mm beträgt.

17. Anordnung nach einem der Ansprüche 1 bis 16, bei der die Höhe des Randes (30A) kleiner ist als die Breite der Kontaktflächen (28,40).

18. Anordnung nach Anspruch 17, bei der die Höhe etwa 0,6 mm beträgt.

19. Anordnung nach einem der Ansprüche 1 bis 18, umfassend ein Antirotationsmittel (70) auf der Außenfläche des Prothesenteils (32).

20. Rand (30A) zum Passen zu einer Prothesenteil-Installationseinheit, so daß die Prothesenteil-Installalationseinheit in der Anordnung nach einem der Ansprüche 1 bis 19 verwendet werden kann.

21. Prothesenanordnung, umfassend eine Vielzahl von Anordnungen gemäß einem der Ansprüche 1 bis 19 sowie eine Prothese (32), in der die Vielzahl von Prothesenteilen verbaut sind.

22. Prothesenteil zur Verwendung in einer Anordnung gemäß einem der Ansprüche 1 bis 19.

23. Anordnung nach einem der Ansprüche 1 bis 19, bei der das Prothesenteil (32) ein Abdruck-Transfermagnet ist.

## Revendications

1. Un ensemble de fixation prothétique comprenant une première unité (10) destinée à être montée dans une prothèse amovible (32) par moulage de la prothèse (32) autour de l'ensemble, et une deuxième unité (12) adaptée de façon à être rigidement fixée sur le porteur de la prothèse, ladite deuxième unité présentant une face de contact d'extrémité (28) prévue pour une face de contact complémentaire (40) sur ladite première unité (10), lesdites faces (28, 40) étant adaptées de façon à être attirées magnétiquement, caractérisé en ce que ladite première unité (10) ou ladite deuxième unité (12) comprend une jupe (30A) chevauchant et entourant lesdites faces (28, 40) lorsque lesdites faces (28, 40) sont en contact, empêchant ainsi un glissement latéral de celles-ci au-delà d'un niveau prédéterminé.

2. Un ensemble, selon les stipulations de la revendication 1, dans lequel ladite jupe (30A) est disposée sur ladite première unité (10).

3. Un ensemble, selon les stipulations de la revendication 1 ou 2, dans lequel lesdites faces de contact (28, 40) sont plates.

4. Un ensemble, selon l'une quelconque des stipulations des revendications 1 à 3, dans lequel ladite première unité (10) comprend un aimant permanent (10) muni d'un joint (30) adapté de façon à retenir solidement et avec netteté ledit aimant (10).

5. Un ensemble, selon les stipulations de la revendication 4, dans lequel ladite jupe (30A) est disposée sur le joint (30).

6. Un ensemble, selon les stipulations de la revendication 4 ou 5, dans lequel ledit aimant (10) possède une face de contact circulaire (40) sur laquelle le joint (30) ne se prolonge pas.

7. Un ensemble, selon l'une quelconque des stipulations des revendications 4 à 6, dans lequel ledit joint (30) est réalisé en titane (métal) ou en alliage.

8. Un ensemble, selon l'une quelconque des stipulations des revendications 4 à 7, dans lequel ledit joint (30) est réalisé dans un matériau plastique comme le DELRIN®, le polyropylène ou le polyéthylène à poids moléculaire élevé.

9. Un ensemble, selon l'une quelconque des stipulations des revendications 4 à 8, dans lequel l'aimant (10) est enfoncé dans le joint (30) et y est maintenu par une liaison adhésive ou une liaison de fusion.

10. Un ensemble, selon l'une quelconque des stipulations des revendications 4 à 9, dans lequel le joint (30) pour l'aimant (10) présente sur sa face extérieure une section filetée (60) qui permet au joint (30) et à l'aimant (10) d'être vissés dans une bague de retenue (62), la bague étant à son tour adaptée de façon à être fermement maintenue dans la prothèse (32).

11. Un ensemble, selon les stipulations de la revendication 10, dans lequel le joint (30) et l'aimant (1) sont aptes à être montés dans la bague de retenue (62) avec un vide derrière le joint de telle sorte à pouvoir réagir à la pression axiale en souplesse.

12. Un ensemble, selon l'une quelconque des stipulations des revendications 4 à 11, dans lequel l'aimant (10) est en forme de dôme.

13. Un ensemble, selon l'une quelconque des stipulations des revendications 4 à 12, dans lequel l'aimant (10) est un aimant à pôle fendu.

14. Un ensemble, selon l'une quelconque des stipulations des revendications 1 à 13, dans lequel la jupe (30A) est conçue de manière à chevaucher l'extrémité de la deuxième unité (12) et à présenter un petit dégagement latéral pour permettre un jeu limité pour l'élimination des contraintes de la prothèse.

15. Un ensemble, selon les stipulations de la revendication 14, dans lequel le dégagement latéral se situe entre 0,05 et 1 mm.

16. Un ensemble, selon les stipulations de la revendication 15, dans lequel le dégagement latéral est environ égal à 0,2 mm.

17. Un ensemble, selon l'une quelconque des stipulations des revendications 1 à 16, dans lequel la hauteur de la jupe (30A) est inférieure à la largeur desdites faces de contact (28, 40).

18. Un ensemble, selon les stipulations de la revendication 17, dans lequel ladite hauteur est environ égale à 0,6 mm.

19. Un ensemble, selon l'une quelconque des stipulations des revendications 1 à 18, comprenant un moyen anti-rotationnel (70) sur la surface extérieure du membre prothétique (32).

20. Une jupe (30A) destinée à être montée sur un membre prothétique de l'unité de montage de manière à ce que ledit membre prothétique de l'unité de montage puisse être utilisé dans le cadre des opérations d'assemblage énoncées dans l'une quelconque des revendications 1 à 19.

21. Un ensemble prothétique comprenant une pluralité d'ensembles, selon l'une quelconque des stipulations des revendications 1 à 19, et une prothèse (32) dans laquelle la pluralité desdits membres prothétiques sont montés.

22. Un membre prothétique destiné à être utilisé dans un ensemble, selon l'une quelconque des stipulations des revendications 1 à 19.

23. Un ensemble, selon l'une quelconque des stipulations des revendication 1 à 19, dans lequel ledit membre prothétique (32) est un aimant à transfert d'impression.
